# EUROPÄISCHE PATENTSCHRIFT

(11) **EP 1 308 075 B1**
(45) Veröffentlichungstag und Bekanntmachung des Hinweises auf die Patenterteilung: **20.12.2006**
(21) Anmeldenummer: 02020015.0
(22) Anmeldetag: 06.09.2002
(51) Int. Cl.: A01B 59/043, B60D 1/36

(54) **Kuppelhilfe und Verfahren zum Ankuppeln von gezogenen Geräten oder Anhängern, die eine Deichsel aufweisen, an einen Traktor**
Hitching aid and method for connecting implements or trailers with a drawbar to a tractor
Aide et méthode pour accoupler un outil ou une remorque avec un timon à un tracteur

(30) Priorität: 05.11.2001 DE 10153823
(43) Veröffentlichungstag der Anmeldung: 07.05.2003
(73) Patentinhaber: GKN Walterscheid GmbH, 53797 Lohmar (DE)
(72) Erfinder: Ollefs, Horst, Dipl.-Ing., 47447 Moers (DE)
(74) Vertreter: Harwardt, Günther

(56) Entgegenhaltungen:
- BE-A- 514 464
- CH-A- 437 003
- DE-A- 3 514 785
- FR-A- 1 423 301
- US-A- 4 377 296

## Beschreibung

Die Erfindung betrifft ein Verfahren zum Ankuppeln eines gezogenen Gerätes oder Anhängers mit Deichsel an einen Traktor, der eine Dreipunktanbaueinrichtung mit zwei kraftbetätigt höhenverstellbaren Unterlenkern, von denen mindestens einer kraftbetätigt seitenverschwenkbar ist, und ferner ein erstes Kupplungselement aufweist, wobei der Deichsel ein zweites Kupplungselement zugeordnet ist, das mit dem ersten Kupplungselement verbunden wird. Die Erfindung betrifft ferner eine Vorrichtung zur Ausübung des Verfahrens.

Bei einachsigen bzw. mehrachsigen Anhängern wird heute zunehmend die sogenannte Untenanhängung am Traktor eingesetzt. Bei dieser Anhängung sind ein Zughaken, ein Zugbolzen oder eine Kugel als erste Kupplungselemente fest am Heck eines Traktors montiert. Die Deichsel des Anhängers ist mit einem entsprechenden zweiten Kupplungselement versehen, das also eine Zugöse oder aber eine Kugelpfanne aufweist. Beim Ankuppeln ist das dem Traktor zugeordnete erste Kupplungselement schlecht einsehbar. Aus diesem Grunde werden beispielsweise Zughakenkupplungen eingesetzt, die eine das erste Kupplungselement in Form eines Zughakens tragende, sowohl in der vertikalen als auch in der horizontalen Ebene schwenkbare Zugstange umfassen, deren Hubbewegung von den Hubarmen des Krafthebers erzeugt wird. Dabei ist die Zugstange teleskopartig ausgebildet, so dass sie in ihrer Länge verstellbar ist. Für das Ankuppeln kann die Zugstange verlängert werden, so dass der Traktorfahrer vom Fahrersitz aus die Annäherung des Zughakens an die Zugöse der Deichsel des anzuhängenden Anhängers beobachten kann. Durch Betätigen des Hubwerks kann der Zughaken angehoben werden, um in die Zugöse der Deichsel eingeführt zu werden. Durch Zurücksetzen des Traktors kann die Zugstange wieder auf ihre ursprüngliche Länge zurückgeführt werden und mit dem Traktorheck verriegelt werden. Eine solche Zughakenkupplung ist in der DE-AS 1 294 707 beschrieben.

In der US 6089328 A ist eine Traktoranbaueinrichtung erläutert, die zwei am Heck des Traktors im seitlichen Abstand zueinander angeordnete Unterlenker umfasst. Diese sind höhenverstellbar und zusätzlich aufeinander zu bzw. voneinander weg verschwenkbar. Zur Höhenverstellung dient ein Hubwerk. Jedem Unterlenker ist ein Hydraulikzylinder zur seitlichen Verschwenkung zugeordnet. Die Länge dieser Hydraulikzylinder kann automatisch durch ein Kontrollsystem geregelt sein.

In der FR 2 803 560 A1 ist eine Kuppelhilfe für ein Gerät oder Anhänger mit Deichsel zur Verbindung mit einem Traktor beschrieben, welche eine an der Deichsel schwenkbar angebrachte Schwinge umfasst, die zwei Arme aufweist, die an ihrem freien Ende jeweils mit einem Haken versehen sind. Die Haken werden mit einer an den Unterlenkern befestigten Ackerschiene in Eingriff gebracht. Die Deichsel wird über die Unterlenker angehoben. Durch Zurücksetzen des Traktors soll versucht werden, die an der Deichsel vorgesehene Zugöse mit einem Haken am Traktorheck in eine übereinstimmende Lage zu bringen, so dass danach durch Absenken der Deichsel eine Verbindung zwischen beiden hergestellt werden kann. Die vorbeschriebene Anordnung erfordert, dass der Traktorfahrer genau beobachten muss, wann eine Lage erreicht ist, die ein Kuppeln der Zugöse mit dem am Traktor befindlichen Zughaken möglich ist. Dies ist praktisch wegen der Anordnung am Traktorheck vom Fahrersitz aus nicht möglich

Die BE 514 464 A beschreibt die Verbindung zwischen einem Traktor und einem Gerät, welche eine Selbstausrichtung des Gerätes auf eine vorgegebene Spur und Mittel zum Einwirken von Hand zur Veränderung der Spur im Verhältnis zum Traktor ermöglicht. Dabei wird das Gerät mittels einer Zugstange, die gabelartig gestaltet ist, an eine Schiene, die Teil eines Rahmens ist, angehängt, wobei der Rahmen mit den Unterlenkern eines Traktors verbunden ist. Die Schiene weist Bohrungen auf, in die Bolzen einsteckt werden, die zwischen sich einen seitlichen Bewegungsfreiraum für die Zugstange des Gerätes ermöglichen. Das Gerät selbst ist über Steckbolzen in Bewegungsrichtung des Traktors an die Schiene fest angekoppelt. Dadurch kann das Gerät seitlich zur Führungsachse, die durch die Längsachse des Traktors vorgegeben wird, versetzt werden. Dies kann selbsttätig erfolgen. Andererseits ist aber auch ein Versatz dadurch ermöglicht, dass über einen Betätigungshebel von Hand auf die Zugstange eingewirkt wird. Der Betätigungshebel ist als doppelarmiger Hebel gestaltet. Er stützt sich an einem Arm, der mit dem Traktor einerseits und dem Gerät andererseits verbunden ist, ab. Eine Schwenkbewegung um die Abstützung am Arm erzeugt ein seitliches Auslenken der Zugstange und damit eine entsprechende Verlagerung des angehängten Gerätes im Verhältnis zur Längsachse des Traktors.

Der Erfindung liegt die Aufgabe zugrunde, ein Verfahren zum Ankuppeln eines gezogenen Gerätes oder Anhängers mit einer Deichsel an einen Traktor sowie eine Vorrichtung zum Ausüben des Verfahrens vorzuschlagen, die unter Nutzung der Dreipunktanbaueinrichtung eines Traktors das Hinführen des zweiten Kupplungselementes, das an der Deichsel des Gerätes oder Anhängers angebracht ist, zu dem am Traktorheck befindlichen ersten Kupplungselement erleichtert.

Gelöst wird diese Aufgabe erfindungsgemäß die Merkmale von Anspruch 1.

In Ausgestaltung des Verfahrens ist vorgesehen, dass die Deichsel mit dem zweiten Kupplungselement zum ersten Kupplungselement zusätzlich durch seitliches Verschwenken der Unterlenker ausgerichtet wird.

Für die Ausübung des Verfahrens ist die Vorrichtung nach Anspruch 3 vorgesehen.

In Ausgestaltung dieser Vorrichtung ist vorgeschlagen, dass die Wegbegrenzungsmittel einen an der Deichsel anbrachten und mit der Schiene zusammenwirkenden Anschlag umfassen und/oder Anzeigemittel vorgesehen sind, die an der Deichsel angebracht sind und den zum Kuppeln des ersten Kupplungselementes mit dem zweiten Kupplungselement erforderlichen Relativweg der Deichsel zur Schiene anzeigen.

Von Vorteil bei dem erfindungsgemäßen Verfahren und der Vorrichtung zur Ausübung desselben ist, dass nur eine in die Kupplungshaken der Unterlenker einhängbare Schiene benötigt wird, an der Führungsmittel zur Führung der Deichsel angebracht sind, wobei die Schiene im Zusammenwirken mit der Dreipunktanbaueinrichtung des Traktors genutzt werden kann, die Deichsel anzuheben. Eine Reiativbewegung und damit Annäherung in Längsrichtung der Kupplingselemente wird durch Bewegen des Traktors, d.h. durch eine Relativbewegung zur Deichsel erzeugt, wobei die Deichsel auf der Schiene aufliegt und somit über das Hubwerk angehoben und abgesenkt werden kann. Die Führungsmittel erlauben eine Längsverstellung, d.h. eine Relativbewegung in Längsrichtung der Deichsel zwischen dieser und der Schiene, so dass das zweite Kupplungselement dem ersten Kupplungselement angenähert wird. Befindet sich dieses zweite Kupplungselement im Bereich des ersten Kupplungselementes, das am Heck des Traktors befestigt ist, sind die Wegbegrenzungsmittel an der Deichsel in Wirkverbindung mit der Schiene, so dass die Unterlenker abgesenkt werden können, wodurch die beiden Kupplungselemente zueinander in Eingriff gelangen. Als Kupplungselemente kommen die zum Stand der Technik beschriebenen Kupplungselemente, d.h. Zughaken, Zugbolzen oder Kugelkupplung in Frage. Ist eine seitliche Ausrichtung des zweiten Kupplungselementes zum ersten Kupplungselement erforderlich, weil die Längsachse der Deichsel nicht mit der Längsachse des Traktors übereinstimmt, so kann die hydraulische Seitenstrebe betätigt werden, wodurch die Unterlenker seitenverschwenkt werden und das zweite Kupplungselement zum ersten am Traktor befindlichen Kupplungselement ausgerichtet wird.

Zusätzlich zur Begrenzung des Relativwegs der Deichsel in Längsrichtung im Verhältnis zur Schiene in Form eines Anschlages, der an der Deichsel anbringbar ist und gegen die Schiene anläuft, ist es möglich, der Schiene Anzeigemittel zuzuordnen, welche vom Traktorfahrer, wenn er sich auf dem Traktorsitz befindet, einsehbar sind. Aus der Stellung zur Schiene ist erkennbar, ob sich das zweite Kupplungselement, das der Deichsel zugeordnet ist, dem ersten Kupplungselement in der richtigen Weise angenähert hat.

Vorzugsweise sind die Wegbegrenzungsmittel, die an der Deichsel anbringbar sind, in Form eines Anschlags vorgesehen, der mit der Schiene zusammenwirkt. Als Anzeigemittel, kann eine an der Deichsel anbringbare Markierung vorgesehen sein.

In Ausgestaltung der Erfindung ist vorgesehen, dass die Führungsmittel durch zwei Führungsbolzen dargestellt sind, welche im Abstand voneinander an der Schiene befestigbar sind. Dabei ist es möglich, die Führungsschiene mit Bohrungen zur lösbaren Befestigung der Führungsbolzen zu versehen.

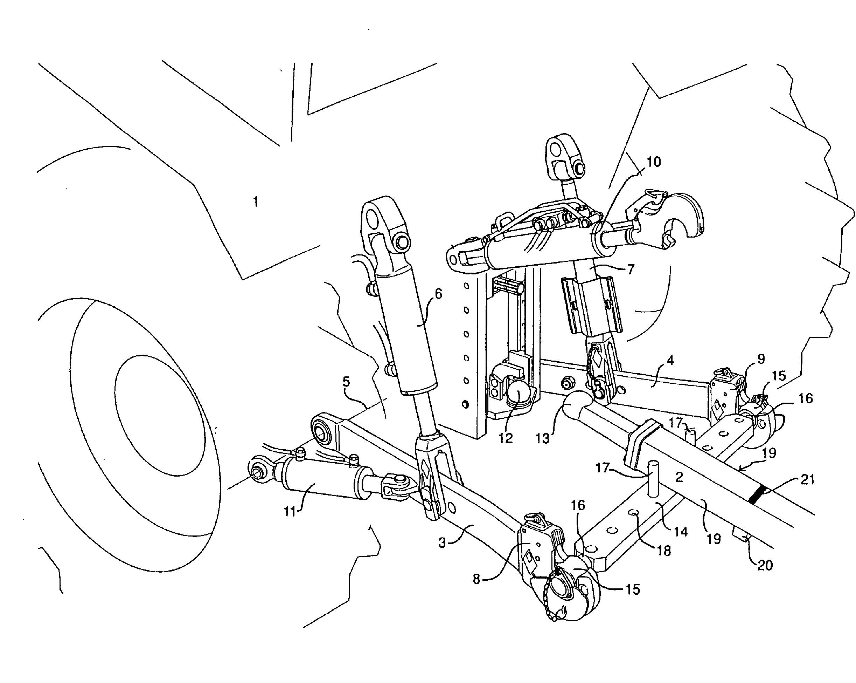

Die beiden erfindungsgemäßen Lösungen sind anhand der beigefügten Zeichnung näher erläutert.

In der Zeichnung ist das Heck des Traktors 1 in Umrissen dargestellt. Ferner ist von dem anzuhängenden Gerät bzw. Anhänger lediglich die Deichsel 2 ersichtlich. Die dem Traktor 1 zugeordnete Dreipunktanbaueinrichtung umfasst einen ersten Unterlenker 3 und einen zweiten Unterlenker 4, die seitlich am Traktorheck bezüglich der Längsachse des Traktors versetzt angeordnet sind. Die beiden Unterlenker 3, 4 sind um eine gemeinsame Schwenkachse 5, die quer zur Längsachse des Traktors verläuft, schwenkbar mit einem Ende am Traktorheck befestigt. Der erste Unterlenker 3 ist durch eine erste Hubstrebe 6, welche als Hydraulikzylinder ausgeführt ist, mit einem nicht dargestellten Hubwerk verbunden. Die zweite Hubstrebe 7 verbindet den zweiten Unterlenker 4 mit dem nicht dargestellten Hubwerk, über welches beide Unterlenker 3, 4 um die Schwenkachse 5 schwenkend angehoben bzw. abgesenkt werden können.

Der erste Unterlenker 3 weist an seinem der Schwenkachse 5 entfernten Ende einen ersten Kupplungshaken 8 auf. Der zweite Unterlenker 4 weist an seinem der Schwenkachse 5 entfernten Ende den zweiten Kupplungshaken 9 auf. Oberhalb und in seitlicher Richtung mittig zwischen den beiden Unterlenkern 3, 4 ist ein Oberlenker 10 angebracht.

Dem ersten Unterlenker 3 ist eine Seitenstrebe 11 zugeordnet, die als doppeltwirkender Hydraulikzylinder gestaltet ist. Dieser ist mit einem Ende am Traktorheck um die Schwenkachse 5 schwenkbar befestigt. Das andere Ende der Seitenstrebe 11 ist im Abstand zur Schwenkachse 5 mit dem ersten Unterlenker 3 verbunden. Durch Verlängerung und Verkürzung der als doppelt wirkender Hydraulikzylinder gestalteten Seitenstrebe 11 kann der erste Unterlenker 3 seitlich verschwenkt werden, d.h. auf den zweiten Unterlenker 4 zu bewegt werden oder sich von diesem entfernend bewegt werden. Am Heck des Traktors 1 ist ferner ein erstes Kupplungselement 12 befestigt, das beim dargestellten Ausführungsbeispiel in Form einer Kugel ausgeführt ist, die mit einem entsprechenden und an der Deichsel 2 befestigten zweiten Kupplungselement 13 in Form einer Kugelpfanne zusammenwirkt. Wenn beide miteinander gekuppelt sind, wird der Eingriffszustand zwischen beiden durch ein Sicherungselement gesichert.

Den beiden Unterlenkern 3, 4 ist eine Schiene 14 zugeordnet, die an ihren beiden Enden jeweils mit einem Anschlusselement 15 in Form einer Kugel versehen ist. Diese sind in den Kupplungshaken 8, 9 aufgenommen und verbinden dadurch die beiden Unterlenker 3, 4. Die beiden Anschlusselemente 15 sitzen jeweils auf einem Zapfen 16. Des weiteren ist die Schiene 14 mit Bohrungen 18 versehen, die entlang der Schiene 14 zwischen den beiden Kupplungshaken 8, 9 verteilt angeordnet sind. Entsprechend der Breite der Deichsel 2 sind die beiden Führungsbolzen 17 im Abstand zueinander in jeweils eine der Bohrungen 18 eingesetzt und mit der Schiene 14 verbunden. Zwischen den beiden Führungsbolzen 17 ist die Deichsel 2 aufgenommen, so dass sich ihre beiden Seitenflächen 19 an die Führungsbolzen 17 seitlich anlegen können. Darüber hinaus liegt die Deichsel 2 auf der Schiene 14 auf, wenn die Unterlenker 3, 4 sich in einer entsprechend angehobenen Position befinden. Darüber hinaus ist in einem bestimmten Abstand von dem zweiten Kupplungselement 13 an der Deichsel 2 ein Wegbegrenzungselement in Form eines Anschlages 20 angebracht. Das Ankuppeln des Gerätes bzw. Anhängers erfolgt derart, dass zunächst der Traktor 1 durch den Traktorfahrer mit abgesenkten Unterlenkern 3, 4 zurückgesetzt wird, so dass die Deichsel 2 in den Bereich zwischen die beiden Führungsbolzen 17 gelangt. Durch weiteres Zurücksetzen wird das zweite Kupplungselement 13 dem ersten Kupplungselement 12 angenähert, bis der Anschlag 20 gegen die Schiene 14 zur Anlage kommt, wo mit angezeigt ist, dass das zweite Kupplungselement 13 sich in einer Lage oberhalb des ersten Kupplungselementes 12 befindet, wenn die beiden Unterlenker 3, 4 angehoben sind und die Deichsel 2 tragen. Sollte ein Kuppeln der beiden Kupplungselemente 12, 13 nicht möglich sein, weil noch eine seitliche Fehlausrichtung gegeben ist, kann diese Ausrichtung durch Betätigen des Seitenstrebe 11, d.h. Verkürzen oder Verlängern derselben korrigiert werden. Hierdurch wird die Schiene 14 seitlich verlagert. Ist die richtige Ausrichtung gegeben, kann das Hubwerk im Sinne des Absenkens der beiden Unterlenker 3, 4 betätigt werden, so dass die beiden Kupplungselemente 12, 13 zueinander in Eingriff gelangen. Über die Seitenstrebe 11 kann auch eine Vorausrichtung vorgegeben werden, indem bestimmte Stellungen der Steuerungseinrichtung für diese einprogrammiert werden. Die Annäherung des zweiten Kupplungselementes 13 und Ausrichtung zum ersten Kupplungselement 12 kann auch dadurch erleichtert werden, dass seitlich des ersten Kupplungselementes 12 noch Leiteinrichtungen vorgesehen sind, die das zweite Kupplungselement 13 führen, wenn es sich dem ersten Kupplungselement 12 annähert. Zuzüglich zu dem Wegbegrenzungsmittel in Form des Anschlages 20 kann an der Deichsel 2 eine Markierung 21 als Anzeigemittel angebracht werden, die vom Traktorfahrer einsehbar ist und ihm signalisiert, dass in Längsrichtung der Deichsel 2 die nötige Relativstellung zwischen den beiden Kupplungselementen 12, 13 gegeben ist.

### Bezugszeichenliste

- 1: Traktor
- 2: Deichsel
- 3: erster Unterlenker
- 4: zweiter Unterlenker
- 5: Schwenkachse
- 6: erste Hubstrebe
- 7: zweite Hubstrebe
- 8: erster Kupplungshaken
- 9: zweiter Kupplungshaken
- 10: Oberlenker
- 11: Seitenstrebe
- 12: erstes Kupplungselement
- 13: zweites Kupplungselement
- 14: Schiene
- 15: Anschlusselement
- 16: Zapfen
- 17: Führungsmittel / Führungsbolzen
- 18: Bohrung
- 19: Seitenfläche
- 20: Wegbegrenzungsmittel / Anschlag
- 21: Anzeigemittel / Markierung

## Patentansprüche

1. Verfahren zum Ankuppeln eines gezogenen Gerätes oder Anhängers mit Deichsel (2) an einen Traktor (1), der eine Dreipunktanbaueinrichtung mit zwei kraftbetätigt höhenverstellbaren Unterlenkern (3, 4), von denen mindestens einer (3) kraftbetätigt seitenverschwenkbar ist, und ferner ein erstes Kupplungselement (12) aufweist, wobei der Deichsel (2) ein zweites Kupplungselement (13) zugeordnet ist, das mit dem ersten Kupplungselement (12) verbunden wird,
**dadurch gekennzeichnet,**
- **dass** eine Schiene (14) bereit gestellt wird, die an ihren beiden Enden über ein Anschlusselement (15) mit den Unterlenkern (3, 4) des Traktors (1) verbunden wird,
- dass die Unterlenker (3, 4) und damit die Schiene (14) unter die Deichsel (2) bewegt und danach zumindest so weit angehoben werden, bis die Deichsel (2) auf der Schiene (14) aufliegt,
- dass ferner die das zweite Kupplungselement (13) aufweisende Deichsel (2) an der Schiene (14) in ihrer Lage seitlich ausgerichtet und durch Verfahren des Traktors (1) auf der Schiene (14) gleitend, eine Relativbewegung zur Deichsel (2) in deren Längsrichtung ausführend mit ihrem zweiten Kupplungselement (13) zum ersten Kupplungselement (12) geführt wird bis ein an der Deichsel angebrachtes Wegbegrenzungsmittel (20) gegen die schiene so zur Anlage kommt, daß angezeigt wird daß das zweite Kupplungselement (13) sich in einen Lage oberhalb des ersten Kupplungselementes (12) befindet, wenn die beiden Unterlenker (3, 4) angehoben sind und die Deichsel (2) tragen.

2. Verfahren nach Anspruch 1,
**dadurch gekennzeichnet,**
**dass** die Deichsel (2) mit dem zweiten Kupplungselement (13) zum ersten Kupplungselement (12) zusätzlich durch seitliches Verschwenken der Unterlenker (3, 4) ausgerichtet wird.

3. Vorrichtung zur Ausübung des Verfahrens gemäß einem der Ansprüche 1 oder 2,
**gekennzeichnet durch**
- eine Schiene (14),
die an ihren beiden Enden **durch** je ein Anschlusselement (15) mit den Unterlenkern (3, 4) des Traktors (1) verbunden ist,
die Führungsmittel (17) aufweist, die die Deichsel (2) seitlich ausrichten und eine Relativbewegung derselben in Längsrichtung erlauben, und
- Wegbegrenzungsmittel (20),
die an der Deichsel (2) angebracht sind und den Relativweg der Deichsel in Längsrichtung (2) begrenzen.

4. Vorrichtung nach Anspruch 3,
**dadurch gekennzeichnet,**
**dass** die Wegbegrenzungsmittel einen an der Deichsel (2) angebrachten und
mit der Schiene (14) zusammenwirkenden Anschlag (20) umfassen.

5. Vorrichtung nach Anspruch 3 oder 4,
**gekennzeichnet durch**
- Anzeigemittel (21),
die an der Deichsel (2) angebracht sind und den zum Kuppeln des ersten Kupplungselementes (12) mit dem zweiten Kupplungselement (13) erforderlichen Relativweg der Deichsel (2) zur Schiene (14) anzeigen.

6. Vorrichtung nach Anspruch 5,
**dadurch gekennzeichnet,**
**dass** die Anzeigemittel eine an der Deichsel (2) angebrachte Markierung (21) umfassen.

7. Vorrichtung nach einem der Ansprüche 3 oder 5,
**dadurch gekennzeichnet,**
**dass** die Führungsmittel durch zwei Führungsbolzen (17) dargestellt sind, welche im Abstand voneinander an der Schiene (14) befestigt sind.

8. Vorrichtung nach Anspruch 7,
**dadurch gekennzeichnet,**
**dass** die Führungsschiene (14) Bohrungen (18) zur lösbaren Befestigung der Führungsbolzen (17) aufweist.

## Claims

1. Method for coupling a pulled implement or a trailer having a drawbar (2) to a tractor (1), which has a three-point linkage device with two power driven, height-adjustable lower steering arms (3, 4), of which at least one lower steering arm (3) is laterally pivotable by a power drive, and has, further, a first coupling element (12), wherein a second coupling element (13), which will be connected to the first coupling element (12), is arranged to the drawbar (2)
**characterised in**
- **that** a bar (14) is provided, which is connected at its two ends via a connection element (15) to the lower steering arms (3, 4) of the tractor (1),
- **that** the lower steering arms (3, 4) and, thus, the bar (14) are moved under the drawbar (2) and, then, at least are lifted so far, till the drawbar (2) rests on the bar (14),
- **that**, further, the drawbar (2) comprising the second coupling element (13) is aligned laterally on the bar (14) in its position and is, due to moving the tractor (1), guided slidingly on the bar (14) carrying out a relative movement in relation to the drawbar (2) in the longitudinal direction thereof with its second coupling element (13) towards the first coupling element (12), till a travel limiting means (20), attached on the drawbar, abuts the bar in such a manner, that it is indicated, that the second coupling element (13) is in a position above the first coupling element (12), when the two lower steering arms (3, 4) are lifted and carry the drawbar (2).

2. Method according to claim 1,
**characterised in**
**that** the drawbar (2) with the second coupling element (13) is aligned in relation to the first coupling element (12) additionally by laterally pivoting the lower steering arms (3, 4).

3. Device for carrying out the method according to one of claims 1 or 2,
**characterised by**
- a bar (14),
which at its two ends is connected, respectively, by a connection element (15) to the lower steering arms (3, 4) of the tractor (1),
which has guide means (17), which align laterally the drawbar (2) and enable a relative movement of the same in longitudinal direction and
- travel limiting means (20),
which are attached to the drawbar (2) and limit the relative movement of the drawbar (2) in longitudinal direction.

4. Device according to claim 3,
**characterised in**
**that** the travel limiting means comprise an abutment (20), mounted on the drawbar (2) and interacting with the bar (14).

5. Device according to claim 3 or 4,
**characterised by**
- indicating means (21),
which are attached on the drawbar (2) and indicate the relative distance of movement of the drawbar (2) to the bar (14), necessary for coupling the first coupling element (12) to the second coupling element (13).

6. Device according to claim 5,
**characterised in**
**that** the indicating means comprise a marking (21) attached on the drawbar (2).

7. Device according to one of claims 3 or 5,
**characterised in**
**that** the guide means are represented by two guide pins (17), which are attached with a distance between the two on the bar (14).

8. Device according to claim 7,
**characterised in**
**that** the guide bar (14) has bores (18) for detachably fixing the guide pins (17).

## Revendications

1. Procédé d'accouplement d'une machine tractée ou d'une remorque avec timon (2) à un tracteur (1) présentant un dispositif d'attelage en trois points avec deux barres inférieures (3, 4) réglables mécaniquement en hauteur, dont une barre (3) au moins est mécaniquement pivotante latéralement, et présentant en outre un premier élément d'accouplement (12), un deuxième élément d'accouplement (13) raccordé au premier élément d'accouplement (12) étant affecté au timon (2),
**caractérisé**
- **en ce qu'**une barre (14) est prévue, raccordée à ses deux extrémités aux barres inférieures (3, 4) du tracteur (1) par l'intermédiaire d'un élément de raccord (15),
- **en ce que** les barres inférieures (3, 4) et avec elles la barre (14) sont déplacées sous le timon (2) avant d'être relevées au moins jusqu'à ce que le timon (2) repose sur la barre (14),
- **en ce que** le timon (2) comportant le deuxième élément d'accouplement (13) est en outre positionné latéralement sur la barre (14) et guidé en glissant sur la barre (14) avec son deuxième élément d'accouplement (13) vers le premier élément d'accouplement (12) par mouvement du tracteur (1) exécutant un déplacement relatif vers le timon (2) dans la direction longitudinale de celui-ci, jusqu'à ce qu'un moyen de limitation de course (20) monté sur le timon vienne buter contre la barre de manière à signaler que le deuxième élément d'accouplement (13) se trouve positionné au-dessus du premier élément d'accouplement (12) quand les deux barres inférieures (3, 4) sont soulevées et supportent le timon (2).

2. Procédé selon la revendication 1,
**caractérisé**
- **en ce que** le timon (2) avec le deuxième élément d'accouplement (13) est orienté vers le premier élément d'accouplement (12) par pivotement latéral complémentaire des barres inférieures (3, 4).

3. Dispositif pour l'exécution du procédé selon l'une des revendications 1 ou 2,
**caractérisé par**
- une barre (14),
raccordée par l'intermédiaire d'un élément de raccord (15) à chacune de ses deux extrémités aux barres inférieures (3, 4) du tracteur (1),
comportant des moyens de guidage (17) qui positionnent le timon (2) latéralement et permettent un déplacement relatif de celui-ci en direction longitudinale, et par
- des moyens de limitation de course (20),
montés sur le timon (2) et limitant la course relative du timon (2) dans la direction longitudinale.

4. Dispositif selon la revendication 3,
**caractérisé**
**en ce que** les moyens de limitation de course comprennent une butée (20) montée sur le timon (2) et coopérant avec la barre (14).

5. Dispositif selon la revendication 3,
**caractérisé par**
- des moyens d'indication (21),
montés sur le timon (2) et indiquant la course relative exigée du timon (2) sur la barre (14) pour l'accouplement du premier élément d'accouplement (12) avec le deuxième élément d'accouplement (13).

6. Dispositif selon la revendication 5,
**caractérisé**
**en ce que** les moyens d'indication comprennent une marque (21) appliquée sur le timon (2).

7. Dispositif selon l'une des revendications 3 ou 5,
**caractérisé**
**en ce que** les moyens de guidage sont constitués par deux axes de guidage (17) fixés sur la barre (14) à intervalle l'un de l'autre.

8. Dispositif selon la revendication 7,
**caractérisé**
**en ce que** la barre de guidage (14) présente des trous (18) pour la fixation amovible des axes de guidage (17).
